# EUROPEAN PATENT APPLICATION

(11) **EP 1 073 243 A1**
(43) Date of publication of application: **31.01.2001**
(21) Application number: 99202321.8
(22) Date of filing: 14.07.1999
(51) Int. Cl.: H04L 29/06, H04Q 7/22

(54) **Short message service communication system, message service communication system and entertainment platform**

(71) Applicant: Realtime ApS, 1058 Kobenhavn K (DK)
(72) Inventor: Beckmann, Jacob, 2100 Kobenhavn O (DK)
(74) Representative: Elmeros, Claus

(57) **Abstract**

Short message service (SMS) communication system comprising a communication network for mobile communication devices, at least one of said mobile communication devices having a dedicated telephone number, at least one message service centre (12) with connections to the communication network, a value added service platform (14) with connections (13) to the message service centre (12) and a further connection (16) to a computer server (17), a computer server (17) comprising at least one database (18) and being capable of receiving SMS messages from a mobile communication device and transmitting messages to a mobile communication device (11) via said centre (12) or said platform (14), and were the database (18) comprises a set of records for at least one of the mobile communication devices (11) using said computer server (17), each record being dedicated to at least one telephone number of at least one mobile communication device, said record being predefined by receiving at least one SMS message transmitted by the at least one mobile communication device and said record automatically being activated by a SMS message transmitted from the mobile communication device to said computer server (17) and the said at least one telephone number.

## Description

### Field of the invention

The invention relates to a short message service communication system according to the preamble of claim 1, a message service communication system according to the preamble of claim 9, a short message service communication system according to the preamble of claim 10, a short message service communication system according to the preamble of claim 11 and an entertainment platform according to the preamble of claim 13.

### Background of the invention

A mobile communication system is normally based on a cellular radio communication network, such as the Global System for Mobile Communication (GSM).

The short message service (SMS) is a feature, which is incorporated into digital mobile communication networks and mobile telephones. SMS allows a short message, up to 160 characters long, to be sent from a mobile telephone to a short message service centre. From the service centre it is possible to transmit the message to other communication devices capable of receiving SMS messages, such as another mobile telephone, a computer, which can act as a gateway to a fax, the Internet etc. The centre also works as storage for the message until the mobile telephone is ready to receive it. The storage can be necessary when the telephone is turned off or is out of network coverage. When the telephone is ready the message will be forwarded. Beyond receiving, transmitting and storing the SMS messages the centre is also capable of being a gateway to other application servers delivering different kinds of services for users of the SMS system.

Among these services for the users of the mobile telephones are the possibilities of requesting information services on the Internet. For instance if the user wants to know the horoscope of the day for people born in the star sign Aquarius it is possible to transmit a message to the SMS centre requesting this service. The centre will know on receive of the message which Internet page to collect and transmit the text on it to the user as a SMS message.

Another known service is the possibility for the user of a mobile telephone to communicate with the users bank by using SMS messages and for instance receive information on the amount of money on a bank account.

The problem with these services and other known services is the fact that they all demand a lot of typing on the mobile telephone by the user to gain access to the services. Normally it is requested by the services to type several or all of the following information in the SMS message: The telephone number of the application server (a value added service platform), the name of the service, a password, billing address/telephone number and information being used by the service etc.

If the service is needed more than once it is necessary to type all the information again and transmit the information in a new SMS message.

With the keyboard of a mobile telephone in mind this is a major problem in the use of the SMS system.

A reason for the lack of highly developed services in the SMS system is based in the fact that the SMS centre and the value added service platform in their current form only are movers of SMS messages. They have no knowledge of the content of the SMS messages or the mobile devices, which transmit or receive the message except for the telephone numbers. This has led to a situation of to day where the SMS system mostly is used to transmit short messages from one mobile telephone to another rather than being used as a possibility to gain access to highly developed services.

At the same time the numbers of SMS messages a standard short message service centre can handle within a time period is limited. The limited of a standard message service centre is normally up to 15 messages per second received at the entry of the centre from a computer in the mobile communication network. If the centre receive more messages per second it will use its storage capacity to store the messages. This will continue until it no longer has any capacity left. SMS messages will hereafter no longer be received by the centre.

This means that if the centre receives several SMS message at the same time the centre is likely to slow down, resulting in major delays on forwarding the messages to the mobile telephones. In some cases the centre can cease working for longer time periods because of overload in SMS message traffic. This has also in some extend kept the telephone companies from developing more advanced SMS services which could lead to difficulties in providing an acceptable general service for the mobile telephone users.

### Summary of the invention

When, as stated in claim 1, the database comprises a set of records for at least one of the mobile communication devices using said computer server, each record being dedicated to at least one telephone number of at least one mobile communication device, said record being predefined by receiving at least one SMS message transmitted by the at least one mobile communication device and said record automatically being activated by a SMS message transmitted from the mobile communication device to said computer server and the said at least one telephone number it is possible to decrease the amount of data to be typed and transferred to the computer server.

This is partly because the record all ready knows all of the identification information, which makes it unnecessary to transmit the information more than once. At the same time the SMS system all ways forwards the telephone number of the mobile communication device to the database which makes it possible to identify and activate the right record. It is hereby not necessary for the user of the mobile communication device to type any personal identification information in the SMS message if the mobile communication device all ready has a record in the database.

When, as stated in claim 2, each record being changeable by the mobile communication device dedicated to the record it is possible to for the customer to change the profile in the record. Hereby the kind of response, which the customer receives from the entertainment platform, will change.

The customer will only have to transmit the changes in a SMS message and not transmitting the entire record, which makes it easy only to alter parts of the record.

When, as stated in claim 3, the connection between the value added services platform and the computer server being a telephone line it is possible to connect the value added service platform and/or the computer server at any location with a satisfying telephone connection.

When, as stated in claim 4, the connection between the value added services platform and the computer server being an Internet connection it is possible to connect the value added service platform and/or the computer server at any location with a simple modem or router connection to a telephone line.

When, as stated in claim 5, the computer server further being connected to at least one a display it is possible to publish the contents of the SMS messages to spectators if it is a public kind of display. This means that it is possible to create a public forum were the spectators can read the SMS messages from others and get SMS messages containing own responds, like opinions or comments, publicised on the display.

When, as stated in claim 6, the display being at least one text television page it is possible to create a public forum on a medium which is in reach of most people having a modern television.

When, as stated in claim 7, the display being at least one Internet page it is possible to create a public forum on a medium which is in reach of most people having a computer screen and a computer with an Internet connection.

When, as stated in claim 8, the display being a display of at least one other mobile communication device it is possible to publicise messages on other mobile communication devices i.e. a group of other customers on the entertainment platform selected by the platform and based the information in their record.

When, as stated in claim 9, the database comprises a set of records for at least one of the mobile communication devices using said computer server, each record being dedicated to at least one identification characteristic of at least one mobile communication device, said record being predefined by receiving at least one message transmitted by the at least one mobile communication device and said record automatically being activated by a message transmitted from the mobile communication device to said computer server and the said at least one identification characteristic it is possible to decrease the amount of data to be typed and transferred to the computer server it is possible to decrease the amount of data to be typed and transferred in messages to the computer server.

By using any kind of identification characteristic of a mobile communication device it is possible to use the message communication system in connection with many different mobile telephone standards. In the GSM system it is, as mentioned earlier, the telephone number of the mobile telephone, which is forwarded together with the SMS message and is used as an identification characteristic for the record in the database.

In the other systems like the coming wireless application protocol (WAP) system the WAP telephone is not transmitting the telephone number with a communication. Never the less other kinds of characteristics are transmitted from the telephone making it possible for the entertainment platform to distinct the telephone from other telephones.

When, as stated in claim 10, the database comprises a set of records for at least one of the mobile communication devices using said computer server, each record being dedicated to at least one telephone number of at least one mobile communication device, said record being predefined by receiving at least one SMS message transmitted by the mobile communication device, said record automatically being activated by a SMS message transmitted from the at least one mobile communication device to said computer server and the said at least one telephone number, said computer server comprises at least one SMS deliverable service it is possible to use the information on the record to make advanced services. It is also possible to use the information on the record to decrease the amount of data, which need to be transmitted from the mobile communication device.

When, as stated in claim 11, the computer server comprises an algorithm ensuring that the number of SMS messages being transmitted within a time period or time periods to the communication devices are kept under a predefined level it is possible to ensure that the message communication system is not being overloaded by to many SMS message transmitted at the same time.

When, as stated in claim 12, the predefined level being defined by the capacity of the short message service communication system and especially the short message service centre it is possible to ensure that the centre is not being overloaded by to many SMS message transmitted at the same time. This is of significant importance since a overload of SMS messages to the centre will slow down or interrupt the transmission of all kinds of SMS messages and not only the ones to the computer server in the entertainment platform. If overload happens frequently it will affect the popularity of the SMS system in general and advanced services like the entertainment platform especially.

When, as stated in claim 13, the database comprises a set of records for at least one of the mobile communication devices using said computer server, each record being dedicated to at least one telephone number of at least one mobile communication device, said record being predefined by receiving at least one SMS message transmitted by the at least one mobile communication device, said record automatically being activated by a SMS message transmitted from the mobile communication device to said computer server and the said at least one telephone number, said computer server comprises at least one SMS deliverable service it is possible to use the information on the record to create a platform with advanced services.

When, as stated in claim 14, the SMS deliverable service comprises an algorithm with at least one timing device being activated at the receiving of a SMS message from the mobile communication device or the expire of a time period, said service transmitting a SMS message to the mobile communication device at the expire of a time period it is possible to create services which not only respond on messages but also unasked contacts the customer with different kind of messages concerning a service i.e. one which earlier has been used by the customer.

When, as stated in claim 15, the SMS deliverable service comprises an algorithm ensuring that a record being activated by a SMS message and at least one telephone number from a mobile communication device is dedicated to at least one identification name it is possible to create services, were the true identity of the customer only is known by the entertainment platform, because of the information stored the customer's record. Other customers can communicate with the customer without knowing the customer's true identity or telephone number.

When, as stated in claim 16, the algorithm of the SMS deliverable service being capable of transmitting the identification name and SMS message via a connection to at least one display it is possible to create services, which publicise messages from a customer on a display with the identity or the telephone number of the customer being concealed by the identification name.

### The drawing

The invention will be described below with reference to the drawings in which
- fig. 1: illustrates the fundamentals of a prior art message service communication system,
- fig. 2: illustrates a message service communication system according to the invention,
- fig. 3: illustrates another embodiment of the message service communication system according to the invention,
- fig. 4: illustrates the display opportunities according to the invention.

### Detailed description

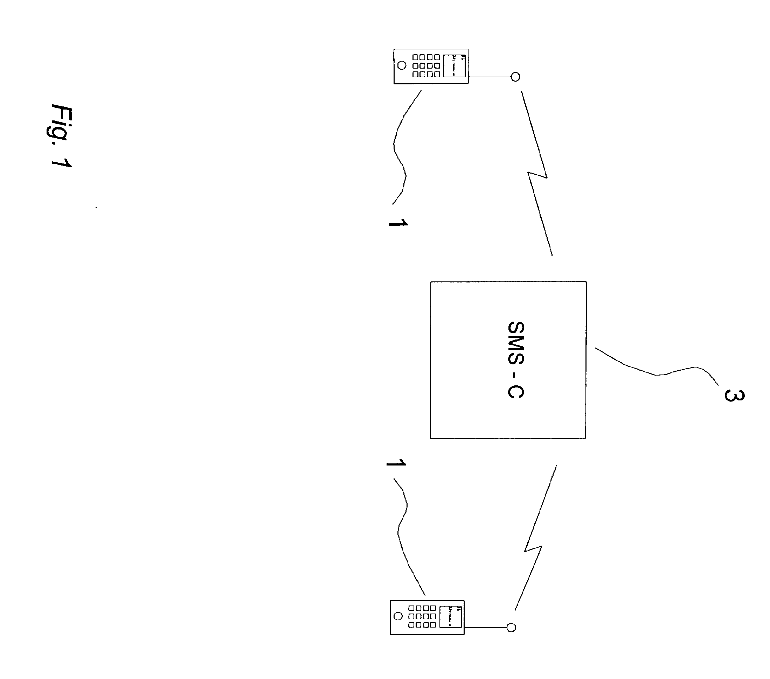

Referring to fig. 1 a conventional message service communication system comprises mobile telephones 1 with the capability of transmitting and receiving messages and a communication network 3 to transfer the messages to and from a message service centre 2.

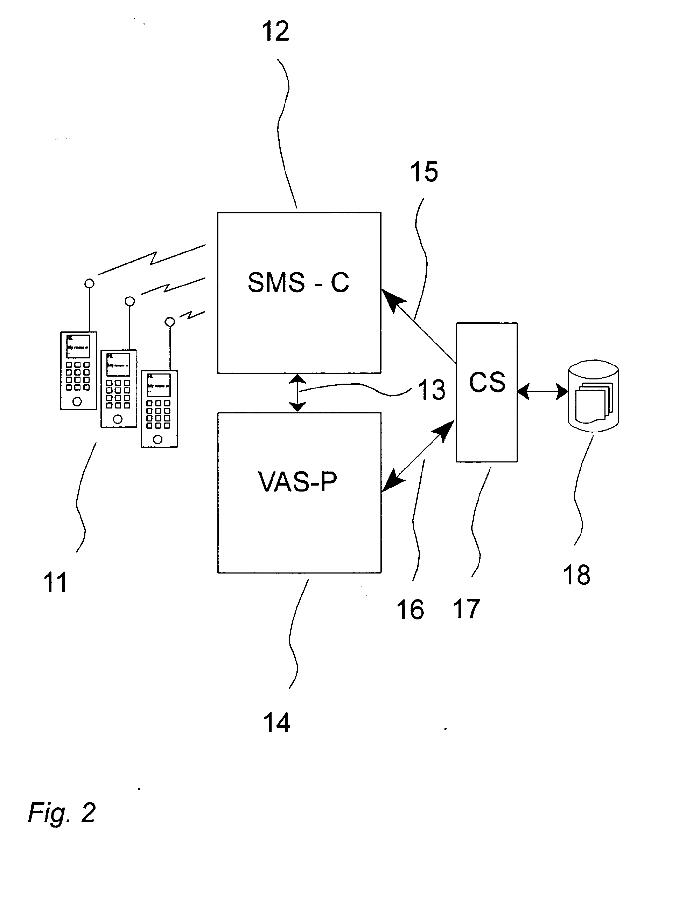

Referring to fig. 2 a message service according to the invention comprises a mobile telephone 11 with the capability of transmitting and receiving messages and a communication network to transfer the messages to and from a message service centre 12.

The mobile telephone 11 is used to transmit a SMS message to an entertainment platform 17, 18 via the message service centre 12 and an application server 14 such as a value added service platform.

The value added service platform 14 consists of a computer with a protocol. The computer uses the protocol to translate a received command in a SMS message to one or more command lines. The command lines can be information about Internet addresses of the entertainment platform 17, 18 and the kind of data to collect from the entertainment platform 17, 18. This means that the user of the mobile telephone 11 only needs to type one or a few letters or digits to request a service from the entertainment platform 17, 18 because the value added service platform translates the letters or digits to the right commands.

The entertainment platform consists of a computer server 17 and a database 18 with a set of records.

Every customer, who contacts the entertainment platform 17, 18, will at the first visit need to create a record. The record contains information about the customer and is dedicated to the telephone number of the mobile telephone, which the customer is using. The information can for instance be the birthday of the customer, whether the customer is male or female, the nationality, the education, hobbies or interests, looks like hair or eye colour, sexual orientation etc. The record will also contain a nickname for the customer were the name can be chosen by the customer or given to the customer from a nickname database within the entertainment database. In its most basic form the record only contains the telephone number which is sufficient to some services.

The record will be public to the customers on the entertainment platform, with at least the telephone number of the customer as the exception.

If the customer wishes to change the information or add new information this is possible by sending a SMS message with the information together with a change command to the computer server. The server will then change or add the information to the customer's record.

The entertainment platform may consist of more than one database. The nickname database is all ready mentioned but it is also possible to have databases with information on customers which are band from one or more services on the platform or from communicating with other customers.

The computer server includes an algorithm to ensure that the numbers of SMS messages transmitted from the entertainment platform over a time period is kept under the limited of the message communication system. Especially the limited of the message service centre is used by the algorithm to find the right time to transmit a SMS message, but also the characteristic of the other components of the message components system are taken in to consideration by the algorithm.

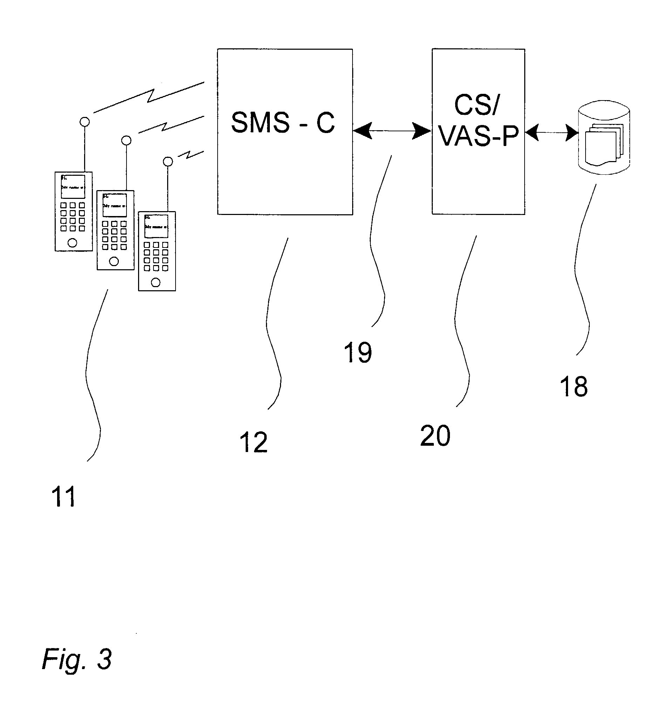

Referring to fig. 3 another embodiment of the invention is shown. The value added service platform is moved from a position in close connection with the message service centre to a position within the entertainment platform. It would be possible to incorporate the value added service platform into the computer server creating a combined computer server and value added service platform 20.

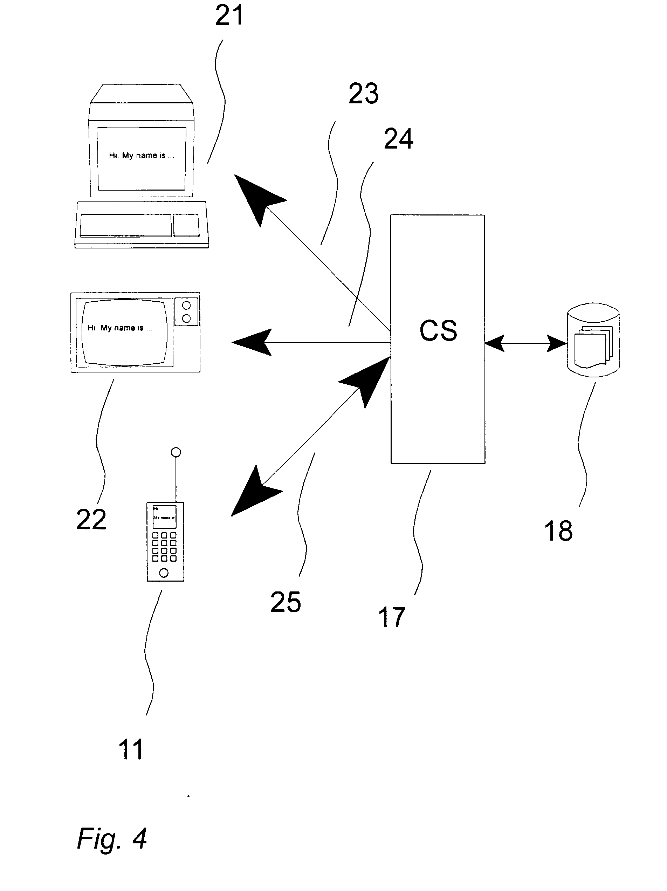

Referring to fig. 4 the entertainment platform 17, 18 is connected to one or more display opportunities. One display opportunity can be a teletext page 22, where the SMS message from a mobile telephone 11 can be displayed and publicised for people with a television and a teletext decoder. The entertainment platform can address more than one teletext page opening the possibility of forwarding SMS messages concerning the same subject or service to the same page.

The connection to the teletext page provider can be established via an Internet connection or a more traditional electrical connection. Before the SMS message can be displayed a transformation to the format of teletext pages is necessary.

Another display opportunity is an Internet page 21 where the SMS message from a mobile telephone 11 can be displayed and publicised for people with a computer and an Internet connection. Before the SMS message can be displayed a transformation to the HTML format is necessary.

For both types of display it is not possible for the spectators to add comments to the displayed information in other ways than to transmit a message to the entertainment platform with a mobile telephone. It will i.e. not be possible to transmit e-mails from the computer to the Internet page.

An example of a service on the entertainment platform is the global chat. The global chat is a chat- and community concept that combines 3 media: The mobile telephone 11, the display opportunity such as a teletext page 22 or the Internet 21. The global chat is a multi-user on-line environment that allows the participants to act and communicate in a common virtual universe. It is a concept that facilitates social interaction among the participants.

To participate in the chat the customer must first registrate his profile in the record dedicated to the telephone number of the mobile telephone. Once registered the customer can start to chat and create relations with other people.

The customer uses the mobile telephone to transmit messages - either to another mobile telephone, to a teletext page or an Internet page. Other customers can then read the message and respond to it by transmitting new messages.

Another example is a dating concept. The dating concept for the mobile telephone builds on the principles of a blind date, chat and elements from the question game "Truth or Dare". The concept helps users finding dates by matching their record profiles and their answers on the given questions. The results are used to connect users to each other afterwards in the best possible combination.

The dating concept makes it possible for customers to communicate with their dates via the mobile and remain anonymous while doing so. The concept can work either as an add-on to the global chat or as a stand-alone application.

To participate in the dating game the customer needs to register his profile once and for all. As soon as he has registered he can enter the world of dating and communicate under his nickname.

A third example of a service is Fraggi. Fraggi is a virtual pet designed for the mobile telephone. Fraggi is the mobile tamagotchi that will entertain the mobile telephone users.

As all other pets Fraggi has needs and desires that must be satisfied by its master - the mobile telephone customer. The customer must periodically care for the "pet", with choices of food, discipline, and other factors influencing its healthy development. The average life span is 7-12 days, but negligence will result in premature virtual "death".

The customer uses the mobile telephone to transmit short messages - to respond to and stimulate Fraggi. Fraggis mood, age and personality will decide whether the stimulus is positive or negative to his development. The challenge for the customer is to try to get to know their Fraggi in order to stimulate him the right way and keep him alive and healthy for as long as possible.

Fraggi starts by the customer hatch out his own Fraggi as desired.

The customer can stimulate Fraggi on 40 different parameters in 8 categories such as food, sports, education, entertainment etc.

Fraggi is proactive and "talks" to its master on regular basic in response to the information stored in the customer's file or according to time counters. The counters are started by the customer's last stimulation of Fraggi or by general parameters for the ageing of Fraggi. The customer can respond to Fraggis proactive communication by transmitting a message. The service also includes hidden and surprising functionality such as Fraggi at night (Fraggi changes personality to a kind of monster at night-time if disturbed), Dr. Zing (the doctor which cures Fraggi when it gets ill) etc.

Many other kinds of services are possible and with the use of the customer record. More primitive ones are services, which correspond to the all ready known message services but with higher user friendliness. An example is the horoscope service where the customer only needs to type the command for the horoscope service. Because of the customers record the entertainment platform all ready knows the birthday and the telephone number to transmit the horoscope to.

It is also possible to make different kinds of game services such as quizzes were the winner's nickname and the winner's prize can be published on the different displays i.e. on the teletext page. The winner can also be informed by receiving a SMS message about the result of the game and information on how or where to collect the prize etc.

Customers also have the possibility of advancing in a social hierarchy and thereby acquire privileges.

One way is to give customers with a frequent use of the services on the entertainment platform the opportunity of having messages publicised on the displays in a graphic style, which differs from the style of more ordinary customers i.e. in a different colour. Honorary titles are also a possibility for the customer who has won a service more times than others customers in a time period.

General for these possibilities is the fact that they are based on the customer's record. The record which contains information about the customer's use of the services on the entertainment platform and results of the use, as well as personal information.

It is understood that many other kinds of services and displays fall within the scope of the invention, as defined in the claims.

### List:

1. Mobile communication device
2. Connection
3. Short message service centre
11. Mobile communication device
12. Short message service centre
13. Connection
14. Application Server (such as a value added service platform)
15. Connection
16. Connection
17. Computer server
18. Database
19. Connection
20. Application Server (such as a value added service platform)/short message service centre
21. Computer screen showing an Internet page
22. Teletext page
23. Connection
24. Connection
25. Connection

## Claims

1. Short message service (SMS) communication system comprising a
• communication network for mobile communication devices, at least one of said mobile communication devices having a dedicated telephone number,
• at least one message service centre (12) with connections to the communication network,
• a value added service platform (14) with connections (13) to the message service centre (12) and a further connection (16) to a computer server (17),
• a computer server (17) comprising at least one database (18) and being capable of receiving SMS messages from a mobile communication device and transmitting messages to a mobile communication device (11) via said centre (12) or said platform (14),
**characterised in,** that
the database (18) comprises a set of records for at least one of the mobile communication devices (11) using said computer server (17), each record being dedicated to at least one telephone number of at least one mobile communication device, said record being predefined by receiving at least one SMS message transmitted by the at least one mobile communication device and said record automatically being activated by a SMS message transmitted from the mobile communication device to said computer server (17) and the said at least one telephone number.

2. Short message service (SMS) communication system as claimed in claim 1, **characterised in,** that each record being changeable by the mobile communication device (11) dedicated to the record.

3. Short message service communication system as claimed in claim 1, **characterised in,** that the connection (16) between the value added services platform (14) and the computer server (17) being a telephone line.

4. Short message service communication system as claimed in claim 1, **characterised in,** that the connection (16) between the value added services platform (14) and the computer server (17) being an Internet connection.

5. Short message service communication system as claimed in claim 1, **characterised in,** that the computer server (17) further is connected to at least one display (11, 21, 22).

6. Short message service communication system as claimed in claim 5, **characterised in,** that the display being at least one text television page (22).

7. Short message service communication system as claimed in claim 5, **characterised in,** that the display being at least one Internet page (21).

8. Short message service communication system as claimed in claim 5, **characterised in,** that the display being at a display of at least one other mobile communication devices (11).

9. Message service communication system comprising a
• communication network for mobile communication devices, at least one of said mobile communication devices having a dedicated identification characteristic
• at least one message service centre with connections to the communication network
• an application server with connections to the message service centre and a further connection to said computer server
• a computer server comprising at least one database and being capable of receiving messages from at least one mobile communication device and transmitting messages to at least one mobile communication device via said centre or said server,
**characterised in,** that
the database comprises a set of records for at least one of the mobile communication devices using said computer server, each record being dedicated to at least one identification characteristic of at least one mobile communication device, said record being predefined by receiving at least one message transmitted by the at least one mobile communication device and said record automatically being activated by a message transmitted from the mobile communication device to said computer server and the said at least one identification characteristic.

10. Short message service (SMS) communication system comprising a
• communication network for mobile communication devices (11), at least one of said mobile communication devices having a dedicated telephone number,
• at least one message service centre (12) with connections to the communication network,
• a value added service platform (14) with connections (13) to the message service centre (12) and a further connection (16) to a computer server (17),
• a computer server (17) comprising at least one database (18) and being capable of receiving SMS messages from at least one mobile communication device and transmitting SMS messages to at least one mobile communication device (11) via said centre (12) or said platform (14),
**characterised in,** that
the database (18) comprises a set of records for at least one of the mobile communication devices (11) using said computer server (17), each record being dedicated to at least one telephone number of at least one mobile communication device, said record being predefined by receiving at least one SMS message transmitted by the mobile communication device, said record automatically being activated by a SMS message transmitted from the at least one mobile communication device to said computer server (17) and the said at least one telephone number, said computer server (17) comprises at least one SMS deliverable service.

11. Short message service (SMS) communication system comprising a
• communication network for mobile communication devices (11), said mobile communication devices each having a dedicated telephone number,
• at least one message service centre (12) with connections to the communication network,
• a value added service platform (14) with connections (13) to the message service centre (12) and a further connection (16) to a computer server (17),
• a computer server (17) comprising at least one database (18) and being capable of receiving SMS messages from at least one mobile communication device (11) and transmitting messages to at least one mobile communication device (11) via said centre (12) or said platform (14),
**characterised in,** that
the computer server (17) comprises an algorithm ensuring that the number of SMS messages being transmitted within a time period or time periods to the mobile communication devices (11) are kept under a predefined level.

12. Short message service (SMS) communication system as claimed in claim 10, **characterised in,** that the predefined level being defined by the capacity of the short message service communication system and especially the short message service centre (12).

13. Entertainment platform comprising a
• computer server (17) being capable of receiving SMS messages from at least one mobile communication device (11) and transmitting messages to at least one mobile communication device (11) ,
• at least one database (18),
**characterised in,** that
the database (18) comprises a set of records for at least one of the mobile communication devices using said computer server (17), each record being dedicated to at least one telephone number of at least one mobile communication device (11), said record being predefined by receiving at least one SMS message transmitted by the at least one mobile communication device, said record automatically being activated by a SMS message transmitted from the mobile communication device to said computer server (17) and the said at least one telephone number and the said at least one telephone number, said computer server (17) comprises at least one SMS deliverable service.

14. Entertainment platform as claimed in claim 13, **characterised in,** that the SMS deliverable service comprises an algorithm with at least one timing device being activated at the receiving of a SMS message from the mobile communication device or the expire of a time period, said service transmitting a SMS message to the mobile communication device (11) at the expire of a time period.

15. Entertainment platform as claimed in claim 13, **characterised in,** that the SMS deliverable service comprises an algorithm ensuring that a record, being activated by a SMS message and at least one telephone number from a mobile communication device (11), is dedicated to at least one identification name.

16. Entertainment platform as claimed in claim 13, **characterised in,** that the algorithm of the SMS deliverable service being capable of transmitting the identification name and SMS message via a connection to at least one display.

17. Entertainment platform as claimed in claim 16, **characterised in,** that the connection (23, 24) being a telephone line.

18. Entertainment platform as claimed in claim 16, **characterised in,** that the connection (23, 24) being an Internet connection.

19. Entertainment platform as claimed in claim 16, **characterised in,** that the display (11, 21, 22) being at least one text television page (22).

20. Entertainment platform as claimed in claim 16, **characterised in,** that the display (11, 21, 22) being an Internet page (21).

21. Entertainment platform as claimed in claim 16, **characterised in,** that the display (11, 21, 22) being a display of another mobile communication device (11).
